(19) Europäisches Patentamt
European Patent Office
Office européen des brevets

(11) Veröffentlichungsnummer: **0 422 441 A2**

(12) # EUROPÄISCHE PATENTANMELDUNG

(21) Anmeldenummer: **90118358.2**

(22) Anmeldetag: **25.09.90**

(51) Int. Cl.⁵: **C08L 69/00**, C08L 77/00, //(C08L69/00,77:00,101:00), (C08L77/00,69:00,101:00)

(30) Priorität: **07.10.89 DE 3933544**

(43) Veröffentlichungstag der Anmeldung: **17.04.91 Patentblatt 91/16**

(84) Benannte Vertragsstaaten: **BE DE ES FR GB IT NL**

(71) Anmelder: **BAYER AG**
**W-5090 Leverkusen 1 Bayerwerk(DE)**

(72) Erfinder: **Heger, Georg, Dr.**
**Uerdinger Strasse 260**
**W-4150 Krefeld(DE)**
Erfinder: **Fengler, Gerd, Dr.**
**Deutschordensweg 12**
**W-4150 Krefeld-Traar(DE)**
Erfinder: **Freitag, Dieter, Dr.**
**Hasenheide 10**
**W-4150 Krefeld 1(DE)**
Erfinder: **Idel, Karsten-Josef, Dr.**
**Am Schwarzkamp 38**
**W-4150 Krefeld(DE)**
Erfinder: **Westeppe, Uwe, Dr.**
**Vogelskamp 72**
**W-4020 Mettmann(DE)**
Erfinder: **Müller, Peter-Rolf, Dr.**
**Paul-Klee-Strasse 76**
**W-5090 Leverkusen(DE)**
Erfinder: **Buekers, Josef**
**Kneinstrasse 58 A**
**W-4150 Krefeld 1(DE)**

(54) **Thermoplastische Mischungen.**

(57) Gegenstand der vorliegenden Erfindung sind thermoplastische Mischungen von Polycarbonaten mit Polyamiden und Elastomeren sowie Verfahren zur Herstellung der erfindungsgemäßen Mischungen.

EP 0 422 441 A2

Xerox Copy Centre

# THERMOPLASTISCHE MISCHUNGEN

Gegenstand der deutschen Patentanmeldung P 3 833 953.6 (Le A 26 397) sind Mischungen von a) speziellen, neuen Polycarbonten mit b) Elastomeren oder mit anderen Thermoplasten als den speziellen neuen Polycarbonaten der Komponente a) und gegebenenfalls c) üblichen Additiven, sowie Verfahren zur Herstellung dieser Mischungen. Als andere Thermoplasten sind auch Polyamide geeignet.

Einzelheiten über die speziellen neuen Polycarbonate sind dem anschließend aufgeführten Wortlaut dieser deutschen Patentanmeldung P 3 833 953.6 auf den Seiten 2 bis 26 der vorliegenden Patentanmeldung zu entnehmen: Gegenstand der Erfindung der deutschen Patentanmeldung P 3 893 953.6 sind Mischungen, enthaltend

a) thermoplastische Polycarbonate auf Basis von Diphenolen der Formel (I)

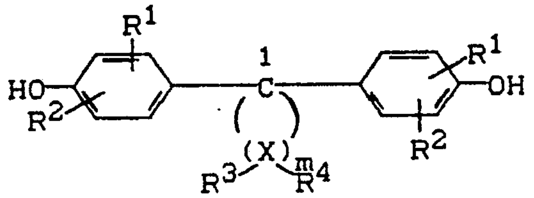

(I),

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X, $R^3$ und $R^4$ gleichzeitig Alkyl ist,

und

b) Elastomere oder andere Thermoplasten als die der Komponente a) und gegebenenfalls

c) übliche Additive, sowie Verfahren zu ihrer Herstellung.

In der deutschen Patentanmeldung P 3 832 396.6 (Le A 26 344) sind die Polycarbonate (a) der erfindungsgemäßen Mischungen sowie ihre Ausgangsprodukte und ihre Herstellung beschrieben.

Ausgangsprodukte für die Polycarbonate (a) sind Dihydroxydiphenylcycloalkane der Formel (I)

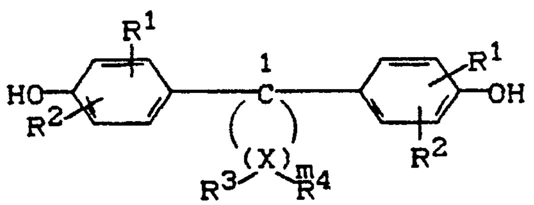

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$, für jedes X individuell wählbar, unabhängig voneinander Wasserstoff oder $C_1$-$C_6$-Alkyl

und

X Kohlenstoff bedeuten,

mit der Maßgabe, daß an mindestens einem Atom X $R^3$ und $R^4$ gleichzeitig Alkyl bedeuten.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkylsubstituiert, dagegen ist die Alkyldisubstitution in $\beta$-Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel (I)), beispielsweise die Diphenole der Formeln

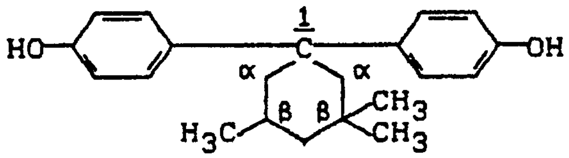

(II)

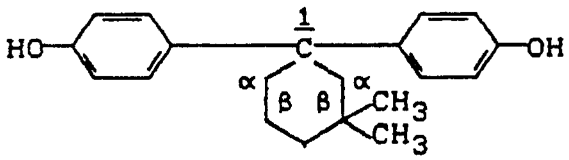

(III) und

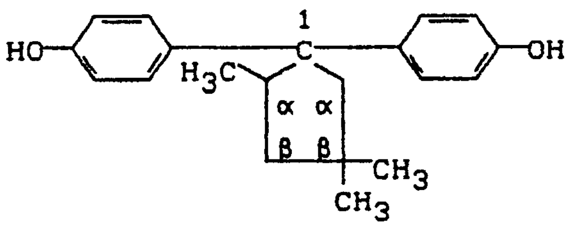

(IV),

wobei das 1,1-Bis-(4-hydroxyphenyl)-3.3.5-trimethylcyclohexan (Formel II) besonders bevorzugt ist.

Die Dihydroxydiphenylcycloalkane der Formel (I) können in an sich bekannter Weise durch Kondensation von Phenolen der Formel (V)

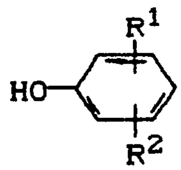

(V)

und Ketonen der Formel (VI)

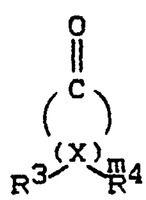

(VI)

hergestellt werden, wobei in den Formeln (V) und (VI) X, $R^1$, $R^2$, $R^3$, $R^4$ und m die für Formel (I) angegebene Bedeutung haben.

Die Phenole der Formel (V) sind entweder literaturbekannt oder nach literaturbekannten Verfahren erhältlich (siehe beispielsweise für Kresole und Xylenole, Ullmanns Encyklopädie der technischen Chemie 4. neubearbeitete und erweiterte Auflage Band 15, Seiten 61 - 77, Verlag Chemie-Weinheim-New York 1978; für Chlorphenole, Ullmanns Encyklopädie der technischen Chemie, 4. Auflage, Verlag Chemie, 1975,

Band 9, Seiten 573-582; und für Alkylphenole, Ullmanns Encyklopädie der technischen Chemie, 4. Auflage, Verlag Chemie 1979, Band 18, Seiten 191-214).

Beispiele für geeignete Phenole der Formel (V) sind: Phenol, o-Kresol, m-Kresol, 2,6-Dimethylphenol, 2-Chlorphenol, 3-Chlorphenol, 2,6-Dichlorphenol, 2-Cyclohexylphenol, Phenylphenole und o-Benzylphenol.

Die Ketone der Formel (VI) sind literaturbekannt (siehe beispielsweise) Beilsteins Handbuch der Organischen Chemie, 7. Band, 4. Auflage, Springer-Verlag, Berlin, 1925 und die entsprechenden Ergänzungsbände 1 bis 4, und J. Am. Chem. Soc. Vol 79 (1957), Seiten 1488-1492, US-PS 2 692 289, Allen et al., J. Chem. Soc., (1959), 2186-2192 und J. Org. Chem. Vol. 38, (1973), Seiten 4431-4435, J. Am. Chem. Soc. 87 , (1965), Seite 1353-1364. Ein allgemeines Verfahren zur Herstellung von Ketonen der Formel (VI) ist beispielsweise in "Organikum, 15. Auflage, 1977, VEB-Deutscher Verlag der Wissenschaften, Berlin, beispielsweise Seite 698. beschrieben.

Beispiele für bekannte Ketone der Formel (VI) sind:

3,3-Dimethylcyclopentanon, 3,3-Dimethylcyclohexanon, 4,4-Dimethylcyclohexanon, 3-Ethyl-3-Methylcyclopentanon, 2,3,3-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 3,3,5-Trimethylcyclohexanon, 3,4,4-Trimethylcyclohexanon, 3,3,5-Trimethylcycloheptanon, 3,5,5-Trimethylcyclo heptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 2,2-Dimethylcyclooctanon, und 3,3,8-Trimethylcyclooctanon.

Beispiele für bevorzugte Ketone sind

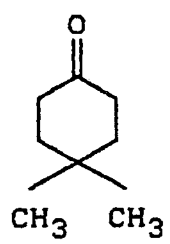

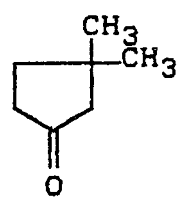

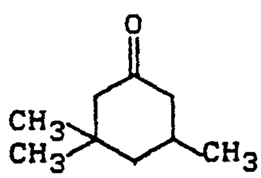

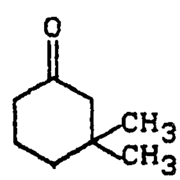

und

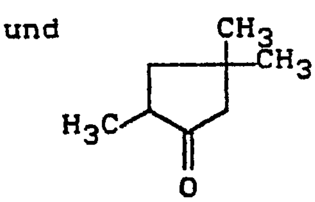

Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30° C bis 300° C, vorzugsweise von -15° C bis 150° C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden, bevorzugt in Mengen von 0,01 - 0,4 Mol/Mol Keton, insbesondere bevorzugt 0,05 - 0,2 Mol/Mol Keton beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht

erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure und Phosphorpentoxid.

Man kann Phenol (V) und Keton (VI) im Molverhältnis (V) : (VI) zwischen 2:1 und 10:1, vorzugsweise zwischen 2,5 : 1 und 6 : 1 bei Temperaturen zwischen -30° C und 300° C, vorzugsweise zwischen -15° C und 150° C und bei Drücken von 1 bis 20 bar, vorzugsweise von 1 bis 10 bar in Anwesenheit saurer Katalysatoren und gegebenenfalls in Anwesenheit von Co-Katalysatoen und/oder Lösungsmitteln und/oder wasserentziehenden Mitteln umsetzen.

Bevorzugt sind in Formel (I) an 1 - 2 Atomen X, insbesondere nur an einem Atom X, $R^3$ und $R^4$ gleichzeitig Alkyl. Bevorzugter Alkylrest ist Methyl; ebenfalls verwendbar sind Ethyl oder $C_3$-$C_6$-Alkylreste, die geradkettig oder verzweigt sein können. Die X-Atome in $\alpha$-Stellung zu dem di-phenylsubstituierten C-Atom (C-1) sind bevorzugt nicht dialkylsubstituiert, dagegen ist die Disubstitution mit Alkyl in $\beta$-Stellung in C-1 bevorzugt.

In manchen Fällen verläuft die Reaktion nicht ganz einheitlich, d.h. es können mehrere, unterschiedliche Produkte entstehen, so daß die gewünschte Verbindung zunächst aus einem Gemisch isoliert werden muß. Für Einzelheiten der Kondensation sei auf Schnell, Chemistry und Physics of Polycarbonates, Interscience Publishers, New York 1964 verwiesen. Manchmal kann die Reaktion durch Wahl entsprechender Katalysatoren und Reaktionsbedingungen so gesteuert werden, daß die gewünschte Verbindung ausfällt oder auskristallisiert, was deren Isolierung erleichtert. Die folgenden Vorschriften veranschaulicht die Herstellung des Diphenols der Formel (II).

Beispiel A

In einem 1 l-Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 bis 30° C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiterhin HCl-Gas durch die Reaktionslösung zugeleitet wird. Nach beendeter Zugabe leitet man für weitere 5 Stunden HCl-Gas ein. Man läßt 8 Stunden bei Zimmertemperatur nachreagieren. Anschließend wird das überschüssige Phenol durch Wasserdampfdestillation entfernt. Der verbleibende Rückstand wird zweimal mit Petrolether (60-90) und einmal mit Methylenchlorid heiß extrahiert und abfiltriert.
Ausbeute: 370 g
Schmelzpunkt: 205 bis 207° C

Die Polycarbonate (a) können gemäß der deutschen Patentanmeldung P 3 832 396.6 aus Diphenolen der Formel (I) hergestellt werden.

Es können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen, beispielsweise mit denen der Formel HO-Z-OH (VII), zur Herstellung von hochmolekularen, thermoplastischen, aromatischen Polycarbonaten verwendet werden.

Geeignete andere Diphenole der Formel HO-Z-OH (VII) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VII) sind Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von Diphenolen der Formel (I) zu den gegebenenfalls mitzuverwendenden anderen Diphenolen, beispielsweise denen der Formel (VII), soll zwischen 100 Mol-% (I) zu 0 Mol-% anderem Diphenol und 2 Mol-% (I) zu 98 Mol-% anderem Diphenol, vorzugsweise zwischen 100 Mol% (I) zu 0 Mol% anderem Diphenol und 5 Mol% (I) zu 95 Mol% anderem Diphenol und insbesondere zwischen 100 Mol%(I) zu 0 Mol% anderem Diphenol und 10 Mol% (I) zu 90 Mol% anderem Diphenol und ganz besonders zwischen 100 Mol% (I) zu 0 Mol% anderem Diphenol und 20 Mol% (I) zu 80 Mol% anderem Diphenol.

Die hochmolekularen Polycarbonate aus den Diphenolen der Formel (I), gegebenenfalls in Kombination mit anderen Diphenolen können nach den bekannten Polycarbonatherstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn Verzweigung gewünscht wird, kann sie in bekannter Weise durch Einkondensieren geringer Mengen, vorzugsweise Mengen zwischen 0,05 und 2,0 Mol% (bezogen auf eingesetzte Diphenole), an drei-oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5′-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und

1,4-Bis-((4'-,4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate (a) dienen monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (VIII) geeignet

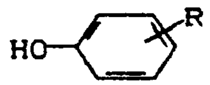

(VIII)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 is 8 Mol-%, bezogen auf eingesetzte Diphenole, eingesetzt.

Die Polycarbonate (a) können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (VII), eingesetzt. Zur Regulierung des Molekulargewichtes können Kettenabbrecher z.B. der Formel (VIII) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0° C und 40° C.

Die gegebenenfalls mitverwendeten Verzweiger (bevorzugt 0,05 bis 2 Mol-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (I) und gegebenenfalls anderen Diphenolen (VII) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (I) und gegebenenfalls Formel (VII); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate (a) nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Polycarbonate (a) können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die Polycarbonate (a) haben bevorzugt Molekulargewichte $\overline{M}$ w (Gewichtsmittel, ermittelt durch Gelchromatographie nach vorheriger Eichung) von mindestens 10 000, besonders bevorzugt von 10 000 bis 300 000 und für Anwendungen in Spritzgußbereich insbesondere von 20 000 bis 80 000. Sie können linear oder verzweigt sein, sie sind Homopolycarbonate oder Copolycarbonate auf Basis der Diphenole der Formel (I).

Polycarbonate (a) im Sinne der Erfindung sind somit hochmolekulare, thermoplastische, aromatische Polycarbonate mit $\overline{M}$ w (Gewichtsmittelmolekulargewichten) von mindestens 10 000, vorzusweise von 10 000 bis 200 000 und insbesondere von 20 000 bis 80 000, die bifunktionelle Carbonatstruktureinheiten der

Formel (Ia)

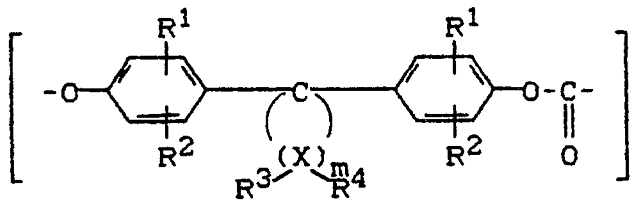

(Ia)

worin

X, $R^1$, $R^2$, $R^3$, $R^4$ und m die für die Formel (I) genannte Bedeutung haben,

in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten im Polycarbonat enthalten.

Die Polycarbonate enthalten somit jeweils zu 100 Mol-% komplementäre Mengen an anderen difunktionellen Carbonatstuktureinheiten, beispielsweise solchen der Formel (VIIa)

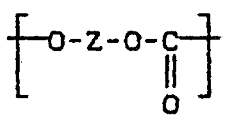

(VIIa),

also in Mengen von 0 Mol-% (einschließlich) bis 98 Mol-% einschließlich, vorzugsweise von 0 Mol-% bis 95 Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten im Polycarbonat. [-Z- in Formel (VIIa) entspricht dem -Z- in Formel (VII)].

Durch den Einbau der Diphenole der Formel (I) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole (I), in denen m 4 oder 5 ist, und ganz besonders für die Polycarbonate auf Basis der Diphenole (Ib)

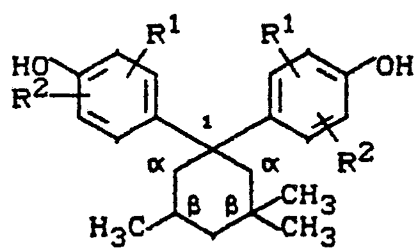

(Ib),

worin

$R^1$ und $R^2$ unabhängig voneinander die für Formel (I) genannte Bedeutung haben und besonders bevorzugt Wasserstoff sind.

Die bevorzugten Polycarbonate (a) sind solche, in denen in den Struktureinheiten der Formel (Ia) m = 4 oder 5 ist und ganz besonders solche aus Einheiten der Formel (Ic)

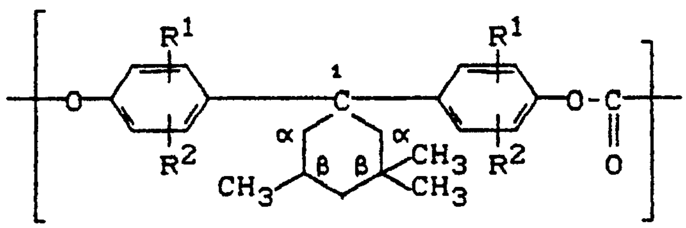

(Ic)

worin

$R^1$ und $R^2$ die für Formel (Ia) genannte Bedeutung haben, besonders bevorzugt aber Wasserstoff sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Kombination mit anderen Diphenolen, insbesondere mit denen der Formel (VII) lassen sich zudem die Polycarbonateigenschaften in günstiger Weise variieren.

In den folgenden Beispielen B.1 bis B.5 wird die Herstellung von Polycarbonaten (a) erläutert. Die relative Viskosität ist gemessen an 0,5 gew.-%igen Lösungen der Polycarbonate in $CH_2Cl_2$.

Die Einfriertemperatur oder Glastemperatur wird gemessen durch Differential Scanning Calorimetry (DSC).

Beispiel B.1

31,0 g (0,1 Mol) des Diphenols der Formel (II), 33,6 g (0,6 Mol) KOH und 560 g Wasser werden in einer Inertgas-Atmosphäre unter Rühren gelöst. Dann fügt man eine Lösung von 0,188 g Phenol in 560 ml Methylenchlorid zu. In die gut gerührte Lösung wurden bei pH 13 bis 14 und 21 bis 25 °C 19,8 g (0,2 Mol) Phosgen eingeleitet. Danach wird 0,1 ml Ethylpyridin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,259.

Die Glastemperatur des Polymers wurde zu 233 °C bestimmt (DSC).

Beispiel B.2

68,4 g (0,3 Mol) Bisphenol A (2,2-Bis-(4-hydroxyphenyl)propan, 217,0 g (0,7 Mol) Diphenol der Formel (II), 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25 °C 198 g (2 Mol) Phosgen eingeleitet. Danach wird 1 ml Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,336.

Die Glastemperatur des Polymers wurde zu 212 °C bestimmt (DSC).

Beispiel B.3

Wie in Beispiel B.2 wurde eine Mischung aus 114 g (0,5 Mol) Bisphenol A und 155 g (0,5 Mol) Diphenol der Formel (II) zum Polycarbonat umgesetzt.

Das Polycarbonat zeigte eine relative Lösungsviskosität von 1,386.

Die Glastemperatur des Polymer wurde zu 195 °C bestimmt (DSC).

Beispiel B.4

Wie in Beispiel B.2 wurde eine Mischung aus 159,6 g (0,7 Mol) Bisphenol A und 93 g (0,3 Mol)

Diphenol der Formel (II) zum Polycarbonat umgesetzt.

Das Polycarbonat zeigte eine relative Lösungsviskosität von 1,437.

Die Glastemperatur des Polymers wurde zu 180° C bestimmt (DSC).

Beispiel B.5

31,0 g (0,1 Mol) Diphenol der Formel (II), 24,0 g (0,6 Mol) NaOH und 270 g Wasser werden in einer Inertgas-Atmosphäre unter Rühren gelöst. Dann fügt man eine Lösung von 0,309 g 4-(1,1,3,3-Tetramethylbutyl)-phenol in 250 ml Methylenchlorid zu. In die gut gerührte Lösung wurden bei pH 13 bis 14 und 21 bis 25° C 19,8 g (0,2 Mol) Phosgen eingeleitet. Danach wird 0,1 ml Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,314.

Die Glastemperatur des Polymers wurde zu 234° C bestimmt (DSC).

Zur Abschätzung des UV-Beständigkeit der neuen Polycarbonate wurde die Primärradikalbildung bei UV-Bestrahlung mit einer Quecksilberdampflampe (Kantenfilter 305 nm) im Vergleich zu einem Polycarbonat auf Basis des 2,2-Bis-(4-hydroxyphenyl)-propans bestimmt. Es zeigte sich, daß das Polycarbonat gemäß Beispiel B1 eine geringere Primärradikalbildungsrate und daher eine höhere UV-Beständigkeit aufweist.

Es hat sich nun gezeigt, daß ternäre Mischungen aus den Polycarbonaten der Komponente a) der deutschen Patentanmeldung P 38 33 953.6 (Le A 26 397), thermoplastischen teilkristallinen oder thermoplastischen amorphen Polyamiden gemäß Komponente b) der deutschen Patentanmeldung P 38 33 953.6 (Le A 26 397) und Elastcmeren gemäß Komponente b) der deutschen Patentanmeldung P 38 33 953.6 (Le A 26 397) eine ideale Eigenschaftskombination haben, nämlich gute Wärmeformbeständigkeit, gute Zähigkeit und gutes Alterungsverhalten.

Gegenstand der vorliegenden Erfindung sind somit ternäre thermoplastische Mischungen enthaltend

A) 10 Gew.-% bis 89,9 Gew.-%, vorzugsweise 20 Gew.-% bis 85 Gew.-% und insbesondere 35 Gew.-% bis 75 Gew.-% Polycarbonate der Komponente a) der deutschen Patentanmeldung P 38 33 953.6,

B) 10 Gew.-% bis 89,9 Gew.-%, vorzugsweise 10 Gew.-% bis 75 Gew.-% und insbesondere 15 Gew.-% bis 55 Gew.-% an teilkristallinen oder amorphen Polyamiden und

C) 0,1 Gew.-% bis 50 Gew.-%, vorzugsweise 5 Gew.-% bis 40 Gew.-% und insbesondere 10 Gew.-% bis 30 Gew.-% an Elastomeren, wobei die Summe der Gewichtsprozente aus A) + B) + C) jeweils 100 Gew.-% ist.

Die bevorzugten Polycarbonate der Komponente A) in den ternären Mischungen entsprechen den bevorzugten Polycarbonaten der Komponente a) der deutschen Patentanmeldung P 38 33 953.6, in denen in den Struktureinheiten der Formel (Ia) m = 4 oder 5 ist und ganz besonders solche mit Struktureinheiten der Formel (Ic) der deutschen Patentanmeldung P 38 33 953.6, worin $R^1$ und $R^2$ die für Formel (Ia) genannte Bedeutung haben, besonders bevorzugt aber Wasserstoff sind.

Erfindungsgemäß geeignete teilkristalline oder amorphe Polyamide gemäß Komponente B) sind alle teilkristallinen Polyamide, insbesondere Polyamid-6, Polyamid-6,6, Polyamid-4,6 und teilkristalline Copolyamide auf Basis dieser beiden Komponenten. Weiterhin kommen teilkristalline Polyamide in Betracht, deren Säurekomponente insbesondere ganz oder teilweise (neben Adipinsäure bzw. ε-Caprolactam) aus Terephthalsäure und/oder Isophthalsäure und/oder Korksäure und/oder Sebacinsäure und/oder Azelainsäure und/oder Dodecandicarbonsäure und/oder Adipinsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexanmethylendiamin und/oder Isophorondiamin besteht, und deren Zusammensetzungen aus dem Stand der Technik bekannt sind.

Außerdem sind teilkristalline Polyamide zu nennen, die ganz oder teilweise aus Lactamen mit 6 bis 12 C-Atomen, gegebenenfalls unter Mitverwendung einer oder mehrerer der oben genannten Ausgangskomponenten, hergestellt werden.

Besonders bevorzugte teilkristalline Polyamide B) sind Polyamid-6 und Polyamid-6,6 oder Copolyamide mit nur geringen Anteilen (bis etwa 10 Gew.-%) der Co-Komponenten.

Die als Komponente B) erfindungsgemäß geeigneten amorphen Polyamide werden erhalten durch Polykondensation von Diaminen, beispielsweise Ethylendiamin, Tetramethylendiamin, Hexamethylendiamin, Decamethylendiamin, 2,2,4- und/oder 2,4,4-Trimethylhexamethylendiamin, m-und/oder p-Xylylendiamin, Bis-(4-aminocyclohexyl)-methan oder Gemischen aus 4,4′- oder 2,2′-Diaminodicyclohexylmethanen, 2,2-Bis-(4-amino-cyclohexyl)-propan, 3,3′-Dimethyl-4,4′-diaminodicyclohexylmethan, 3-Aminoethyl-3,5,5-trimethyl-cyclohexylamin, 2,5- und/oder 2,6-Bis(aminomethyl)-norbornan und/oder 1,4-Diaminomethylcyclohexan, mit Dicarbonsäuren, beispielsweise Oxalsäure, Adipinsäure, Azelainsäure, Decandicarbonsäure, Heptadecandicarbonsäure, 2,2,4- und/oder 2,4,4-Trimethyladipinsäure, Isophthalsäure oder geringen Mengen an Terephthalsäure. Selbstverständlich sind auch amorphe Copolymere, die durch Polykondensation mehrerer Monomere erhalten werden, geeignet, ferner solche Copolymere, die unter Zusatz von Aminocarbonsäuren wie ω-Aminocapronsäure, ω-Aminoundecansäure oder ω-Aminolaurinsäure oder ihren Lactamen, hergestellt werden.

Besonders geeignete amorphe Polyamide sind die Polyamide, hergestellt aus Isophthalsäure, Hexamethylendiamin und weiteren Diaminen wie 4,4′-Diaminodicyclohexylmethan, Isophorondiamin, 2,2,4- und/oder 2,4,4-Trimethylhexamethylendiamin, 2,5- und/oder 2,6-Bis-(aminomethyl)-norbonan; oder aus Isophthalsäure, 4,4′-Diaminodicyclohexylmethan und ε-Caprolactam; oder aus Isophthalsäure, 3,3′-Dimethyl-4,4′-diamino-dicyclo-hexylmethan und Laurinlactam; oder aus Terephthalsäure und dem Isomerengemisch aus 2,2,4- und/oder 2,4,4-Trimethylhexamethylendiamin.

Anstelle des reinen 4,4′-Diamino-dicyclohexylmethans können auch Gemische der stellungsisomeren Diamino-dicyclohexylmethane eingesetzt werden, die sich zusammensetzen aus:
70 bis 99 Mol.-% des 4,4′-Diaminoisomeren
1 bis 30 Mol-% des 2,4′-Diaminoisomeren
0 bis 2 Mol-% des 2,2′-Diaminoisomeren
und gegebenenfalls entsprechend höherkondensierten Diaminen, die durch Hydrierung von Diaminophenylmethan technischer Qualität erhalten werden.

Bevorzugt werden Polyamide A) mit einer so geringen Amino-Endgruppen-Konzentration, daß kein nennenswerter Abbau des Polycarbonats bzw. Polyestercarbonats, d.h Verringerung der Viskosität und $M_w$ um mehr als 20 % eintritt - erkennbar an der gleichbleibenden Zähigkeit der Blends. Derartige Polyamide werden durch Endcapping der reaktiven Amino-Endgruppen an den Polymerketten auf der Stufe des Polyamids oder während der Polymerisation des Polyamids unter geeigneten Bedingungen erhalten.

Die Zahl der Aminoendgruppen kann auf der Stufe des Polyamids durch eine Reihe von Endcapping-Reaktionen verringert werden. Derartige Reaktionen sind beispielsweise die Umsetzung mit Carbonsäure-Anhydriden, Säurechloriden ($R^1COCl$), Carbonsäuren, -estern, -amiden $R^1CONR^1R^1$, Oxazolinen, Oxazolinonen oder aber die Umsetzung mit Isocyanaten oder mit Carbodiimiden.

Als weitere Reaktionen sind zu erwähnen: die Umsetzung der Aminoendgruppen mit Aldehyden oder Acetalen, aber auch die Reaktion mit Epoxiden oder die Addition an olefinische Doppelbindungen $R^1CH=CHR^2$ ($R^1$ gesättigter oder ungesättigter aliphatischer oder aromatischer Kohlenwasserstoff; $R^2$ = $R^1$, $-(CO)R^3$, $-(C=O)OR^1$, $-(C=O)OH$, $-CHO$, $-(C=O)NR^1R^1$; $R^3$ = $C_2$-$C_{15}$-Alkylrest, $C_3$-$C_{18}$-Cycloalkyl, $C_6$-$C_{20}$-Arylrest). Des weiteren sind Polymere zu nennen, die die genannten Reaktivgruppen enthalten, wie beispielsweise Styrol-Maleinsäure-Copolymerisate mit Maleinsäureanhydrid-Gehalten von 5-14 Gew.-% (Dylark 132®, 232®, 332®), EP(D)M-Kautschuke mit Maleinsäureanhydrid-Gehalten von 0,3-5 Gew.-%, Copolymere des Ethylens mit Acrylsäure- und/oder Methacrylsäureestern, die zusätzlich noch Epoxy-Gruppen enthalten. Diese Epoxygruppen werden durch Zugabe von Epoxygruppen enthaltenden Monomeren der allgemeinen Formeln (II) oder (III) zum Monomerengemisch in den Kautschuk eingebaut

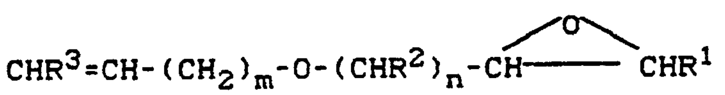

(II)

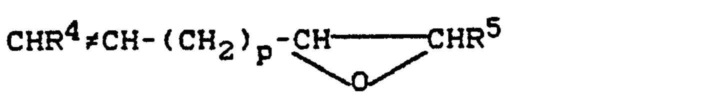

(III)

wobei $R^1$, $R^2$, $R^3$, $R^4$ und $R^5$ Wasserstoff oder Alkylgruppen mit 1 bis 6 C-Atomen darstellen, m eine ganze Zahl von 0 bis 20, n eine ganze Zahl von 0 bis 10 und p eine ganze Zahl von 0 bis 5 ist.

Der Ethylengehalt der Copolymeren liegt im allgemeinen im Bereich von 50 bis 98 Gew.-%, der Anteil an Epoxygruppen enthaltenden Monomeren und der Anteil des Acrylsäure- und/oder Methacrylsäureesters jeweils im Bereich von 1 bis 49 Gew.-% oder mit Maleinsäurederivaten modifizierte Polyoxyalkylene (EP-A-315 167) u.ä.

Die Endcapping-Reaktion kann auf einem Extruder in der Polyamidschmelze mit den Endcapping-Reagentien durchgeführt werden, auch in Anwesenheit eines zweiten oder dritten Thermoplasten. Die

optimalen Reaktionsbedingungen lassen sich leicht in Vorversuchen ermitteln. Dabei ist es offensichtlich, daß die Temperatur so hoch ge wählt werden muß, daß die Harzmasse schmilzt und eine Reaktion mit den zugesetzten Reagentien eintritt, das Polyamid sich dabei aber nicht zersetzt (weitere Einzelheiten sind der US-PS 4 749 754 zu entnehmen).

Die Polyamide A) können auch aus Mischungen von teilkristallinen und amorphen Polyamiden bestehen, wobei vorzugsweise der amorphe Polyamidanteil unter dem teilkristallinen Polyamidanteil liegt.

Bevorzugt sind teilkristalline Polyamide auf Basis Polyamid-6, Polyamid-6,6 und teilkristalline Polyamide auf Basis dieser Hauptkomponenten unter Zusatz von Co-Komponenten der erwähnten Art.

Erfindungsgemäß geeignete Elastomere gemäß Komponente C) sind Polymere die eine Glasübergangstemperatur von unter 0° C, vorzugsweise von unter -10° C und insbesondere von -15° C bis -140° C besitzen. Beispiele für solche Elastomere sind die verschiedensten Kautschuke, wie Ethylen-Propylen-Kautschuk, Polyisopren, Polychloropren, Polysiloxane, ataktisches Polypropylen, Dien-, Olefin-und Acrylatkautschuke sowie Naturkautschuke, Styrol-Butadien-Blockcopolymere, Ethylen-Copolymerisate mit Vinylacetat oder mit (Meth)-Acrylsäureestern, elastische Polyurethane, elastische Polycarbonat-Polyether- sowie Polyester-Polyether-Blockcopolymere.

Bevorzugt werden eingesetzt: Copolymerisate - insbesondere Pfropfcopolymerisate (Pfropfkautschuke) - mit kautschukelastischen Eigenschaften, die im wesentlichen aus mindestens zwei der folgenden Monomeren erhältlich sind: Chloropren, Butadien, Isopren, Isobuten, Styrol, Acrylnitril, Ethylen, Propylen, Vinylacetat und (Meth)-Acrylsäureester mit 1 bis 18 C-Atomen in der Alkoholkomponente, also Polymerisate, wie sie z.B. in "Methoden der organischen Chemie", Houben-Weyl, Band 14/1, Georg Thieme Verlag, Stuttgart 1961, Seiten 393 bis 406 und in C. Bucknall, "Thoughened Plastics", Appl. Science Pblishers, Londen, 1977 beschrieben sind. Die bevorzugten Polymerisate besitzen einen Gelgehalt von über 20, vorzugsweise über 40 Gew.-%.

Genannt werden z.B. Ethylen/Vinylacetat-Copolymerisate mit 15 bis 45 Gew.-% Vinylacetat-Einheiten und Schmelzindices von nicht fließfähig bis 1000, vorzugsweise von 0,1 bis 20, gemessen bei einer 190° C und 2,16 kp Belastung nach DIN 53 735.

Weiterhin werden genannt die sogenannten EPM- bzw. EPDM-Kautschuke, in denen das Gewichtsverhältnis von Ethylen zu Propylenresten im Bereich von 40:60 bis 90:10, vorzugsweise 40:60 bis 65:35, liegt.

Die Mooney-Viskositäten ($ML_{1+4}$/100° C) der unvernetzten EPM- bzw. der EPDM-Kautschuke liegen zwischen 25 bis 100, vorzugsweise zwischen 35 bis 90. Die Gelgehalte der unvernetzten EPM- bzw. EPDM-Kautschuke liegen unter 1 Gew.-%.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen) 1000 C-Atome aufweisen können. Als geeignete Dien-Monomere im EPDM seien beispielsweise genannt: konjugierte Diene, z.B. Isopren und Butadien, und nicht-konjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkenylnorbornene, z.B. 5-Ethyliden-2-norbornen, 5-Butyliden-2-norbornen, 2-Methallyl-5-norbornen, 2-Isopropenyl-5-norbornen und Tricyclodiene, z.B. 3-Methyltricyclo-(5,2,1,0,2,6)-3,8-decadien. Bevorzugt seien die nicht konjugierten Diene 1,5-Hexadien, Ethylidennorbornen und Dicyclopentadien angeführt. Der Diengehalt im EPDM beträgt vorzugsweise 0,5 bis 10 Gew.-%.

Derartige EPM- bzw. EPDM-Kautschuke sind z.B. in der DE-OS 28 08 709 beschrieben.

Darüber hinaus sind als Elastomere gemäß Komponente C) geeignet: selektiv hydrierte Blockcopolymerisate eines vinylaromatischen Monomeren (X) und eines konjugierten Diens (Y) von X-Y-Typ. Diese Blockcopolymerisate können nach bekannten Verfahren hergestellt werden.

Im allgemeinen kann für die Herstellung der geeigneten X-Y-Blockcopolymerisate aus z.B. Styrol, α-Methylstyrol und/oder Vinyltoluol und aus konjugierten Dienen, wie Butadien und/oder Isopren, die für die Herstellung von Styrol-Dien-Blockcopolymerisaten verwendete Technik benutzt werden, die in "Encyclopedia of Polymer Science and Technology", Bd. 15, Interscience, N.Y. (1971) auf den Seiten 508 ff beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben.

Derartige selektiv hydrierte Blockcopolymerisate werden z.B. in der DE-OS 30 00 282 beschrieben.

Ebenfalls geeignet sind mit Styrol und/oder Acrlnitril und/oder (Meth)-Acrylsäurealkylestern gepfropfte Polybutadiene, Butadien/Styrol-Copolymerisate und Poly(meth)acrylsäureester, z.B. Copolymerisate aus Styrol oder Alkylstyrol und konjugierten Dienen (schlagfestes Polystyrol), d.h. Copolymerisate der in der DE-OS 16 94 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/Styrol- oder

Butadien/Acrylnitril-Copolymerisate, Polyisobutene oder Polyisoprene, wie sie z.B. in der DE-OS 2 348 377 (= US-PS 3 919 353) oder in der DE-OS 3 105 364 und DE-OS 3 019 233 beschrieben sind.

Besonders bevorzugte Elastomere sind ABS-Polymerisate (sowohl Misch- als auch Pfropftypen), wie sie z.B. in der DE-OS 2 035 390 (= US-PS 3 644 574) oder in der DE-OS 2 248 242 (= GB-PS 1 409 275) beschrieben sind.

Daneben werden besonders bevorzugt Elastomere eingesetzt, die durch Pfropfreaktion von

I. 10 bis 40 Gew.-%, vorzugsweise 10 bis 35 Gew.-%, insbesondere 15 bis 25 Gew.-%, bezogen auf Pfropfprodukt, mindestens eines (Meth)Acrylsäureesters und/oder eines Gemisches aus

10 bis 35 Gew.-%, vorzugsweise 20 bis 35 Gew.-%, bezogen auf Gemisch, Acrylnitril,

65 bis 90 Gew.-%, vorzugsweise 65 bis 80 Gew.-%, bezogen auf Gemisch, Styrol und gegebenenfalls

0 bis 5 Gew.-%, vorzugsweise 0,1 bis 3 Gew.-%, bezogen auf Gemisch eines Esters der (Meth)-acrylsäure mit tert.-$C_4$-$C_{10}$-Alkoholen auf

II. 60 bis 90 Gew.-%, vorzugsweise 65 bis 90 Gew.-%, insbesondere 75 bis 85 Gew.-%, bezogen auf Pfropfprodukt eines Butadien-Polymerisats mit mindestens 70 Gew.-%, bezogen auf II, Butadienresten als Pfropfgrundlage erhältlich sind, wobei vorzugsweise der Gelanteil der Pfropfgrundlage II > 70 % (in Toluol gemessen), der Pfropfgrad G 0,15 bis 0,55 und der mittlere Teilchendurchmesser $d_{50}$ des Pfropfpolymerisats C) 0,2 bis 0,6 µm, vorzugsweise 0,3 bis 0,5 µm betragen (vgl. z.B. DE-OS 3 324 398 und EP-PS 56 243).

Besonders bevorzugte Elastomere sind auch Pfropfpolymerisate aus

a) 25 bis 98 Gew.-%, bezogen auf Pfropfprodukt, Acrylatkautschuk mit einer Glasübergangstemperatur unter -20 °C als Pfropfgrundlage und

b) 2 bis 75 Gew.-%, bezogen auf Pfropfprodukt, mindestens eines polymerisierbaren, ethylenisch ungesättigten Monomeren, dessen bzw. deren in Abwesenheit von (a) entstandenen Homo- bzw. Copolymerisate eine Glasübergangstemperatur über 25 °C hätten, als Pfropfmonomere (vgl. z.B. EP-OS 50 265).

Bevorzugte andere Elastomere sind auch elastische Polyurethane. Dies sind Reaktionsprodukte aus Diisocyanaten, ganz oder überwiegend aliphatischen Oligo- und/oder Polyestern und/oder -ethern sowie einem oder mehreren Kettenverlängerern. Diese elastischen Polyurethane sind im wesentlichen linear und besitzen thermoplastische Verarbeitungscharakteristiken.

Die elastischen Polyurethane sind bekannt oder können nach bekannten Verfahren (siehe beispielsweise US-Patente 4 129 715 und 3 214 411, J.H. Saunders und K.C. Frisch, "Polyurethanes, Chemistry and Technology", Vol II, Seiten 299 bis 451, Interscience Publishers, New York, 1964, Mobay Chemical Coporation, "A Processing Handbook for Texin Urethane Elastoplastic Materials", Pittsburgh, PA, H.G. Elias, F. Vohwinkel, "Neue poly mere Werkstoffe für die industrielle Anwendung", Carl Hanser Verlag, München Wien 1983, 1. Auflage, 2. Folge, Seite 107 und A. Noshay u. J.E. McGrath, Block Copolymers, Academic Press New York, 1977, Seiten 341, 360 und 364) hergestellt werden.

Ausgangsmaterialien zur Herstellung der Oligoester und Polyester sind beispielsweise Adipinsäure, Bernsteinsäure, Sebacinsure, Oxalsäure, Methyladipinsäure, Glutarsäure, Pimelinsäure, Azelainsäure, Phthalsäure, Terephthalsäure und Isophthalsäure.

Azelainsäure und Adipinsäure sind hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Diemthyl-propylenglykol in Betracht. Darüberhinaus können gemeinsam mit den Glykolen kleine Mengen, bis zu 1 Mol-%, tri- oder höher funktionelle Alkohole, z.B. Trimethylolpropan, Glycerin, Hexantriol usw. eingesetzt werden.

1,4-Butandiol wird hierbei bevorzugt.

Die resultierenden Hydroxyl-oligo-oder -polyester haben ein Molekulargewicht von wenigstens 400, eine Hydroxylzahl von ca. 25 bis 190, vorzugsweise ca. 40 bis 150, eine Säurezahl von ca. 0,5 bis 2 und einen Wassergehalt vo ca. 0,01 bis 0,2 %.

Oligoester bzw. Polyester sind auch oligomere oder polymere Lactone, wie beispielsweise Oligo-caprolacton oder Poly-caprolacton, und aliphatische Polycarbonate, wie beispielsweise Poly-butandiol-(1,4)-carbonat oder Polyhexandiol-(1,6)-carbonat.

Ein besonders geeigneter Oligorest, der als Ausgangsmaterial für die thermoplastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 liegt.

Oligo- bzw. Polyether zur Herstellung der thermoplastischen Polyurethane sind beispielsweise solche auf Basis von Tetramethylenglykol, Propylenglykol und Ethylenglkyol.

Polyacetale sind ebenfalls als Polyether zu verstehen und einsetzbar.

Die Oligoether bzw. Polyether sollen mittlere Molekulargewichte $\overline{M}$ n (Zahlenmittel, ermittelt über die OH-Zahl der Produkte) von 600 bis 2000 vorzugsweise von 1000 bis 2000 haben.

Als organisches Diisocyanat wird zur Herstellung der Polyurethane vorzugsweise 4,4'-Diphenylmethan-diisocyanat verwendet. Es sollte weniger als 5 % 2,4'-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von c. 0,005 bis 0,2 % liegt. Die Acidität, gerechnet als % HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane verwendet werden, beispielsweise die Diisocyante des Ethylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens, des n-Phenylens, des Xylens, des 1,4-Naphthylens, des 1,5-Naphthylens, des 4,4'-Diphenylens, das 2,2-Diphenylpropan-4,4'-diisocyanat, das Azobenzol-4,4'-diisocyanat, des Diphenylsulfon-4,4'-diisocyanat, das Dichlorhexanmethylen-diisocyanat, das Pentamethylen-diisocyanat, das Hexamethylen-diisocyanat, das 1-Chlorbenzol-2,4-diisocyanat, das Furfuryl-diisocyanat, das Dicyclohexylmethan-diisocyanat, das Isophorondiisocyanat, das Diphenylethan-diisocyanat und Bis(-isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-$\beta$-hydroxy-ethylether, 1,3-Phenylen-bis-$\beta$-hydroxyethylether, Bis-(hydroxymethyl-cyclohexan), Hexandiol, Adipinsäure, $\omega$-Hydroxycapronsäure, Thiodiglykol, Ethylendiamin-, Propylen, Butylen-, Hexamethylen-, Cyclohexylen-, Phenylen-, Toluylen-, Xylylendiamin, Diaminodicyclohexylmethan, Isophorondiamin, 3,3'-Dichlorbenzidin, 3,3'-Dinitrobenzidin, Ethanolamin, Aminopropylalkohol, 2,2-Diemthyl-propanolamin, 3-Aminocyclhoexylalkohol und p-Aminobenzylalkohol zu nennen. Das Molverhältnis Oligo- bzw. Polyester zu bifunktionellen Kettenverlängerer bewegt sich im Bereich 1:1 bis 1:50, vorzugsweise 1:2 bis 1:30.

Außer difunktionellen Kettenverlängerern können auch in untergeordneten Mengen bis zu etwa 5 Mol-%, bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der elastischen Polyurethane eingesetzt werden.

Die als Bausteine für die elastischen Polyurethane genannten Diisocyanate, Oligoester, Polyester, Polyether, Kettenverlängerer und monofunktionellen Komponenten sind entweder literaturbekannt oder nach literaturbekannten Verfahren erhältlich.

Die bekannte Herstellung der Polyurethane kann beispielsweise, wie folgt, durchgeführt werden:

So können die Oligo- bzw. Polyester, die organischen Diisocyanate und die Kettenverlängerer für sich vorzugsweise auf eine Temperatur von ca. 50 bis 220 °C erhitzt und dann vermischt werden. Vorzugsweise werden die Oligo- bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann entweder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verkleinern. Zur Erhöhung der Reaktionsgeschwindigkeit können geeignete Katalysatoren, wie z.B. tertiäre Amine, die in dem US-Patent 2 729 618 genannt werden, zur Anwendung kommen.

Außerdem eignen sich als einzusetzende Elastomere Silikonpfropfkautschuke wie sie beispielsweise in DE-OS 3 629 763 beschrieben sind.

Die Herstellung der erfindungsgemäßen Mischungen aus den Komponenten A) + B) + C) erfolgt wie dies in der eingangs aufgeführten deutschen Patentanmeldung P 3 833 953.6 (LE A 26 397) für die binären Mischungen aus den Polycarbonaten der Komponente a) der deutschen Patentanmeldung P 3 833 953.6

mit den thermoplastischen Polyamiden der Komponenten b1) und b2) der deutschen Patentanmeldung P 3 833 953.6 oder mit den Pfropfpolymerisaten von Vinylmonomeren auf Kautschuke der Komponente b1) der deutschen Patentanmeldung P 3 833 953.6 beschrieben ist.

Die Herstellung der erfindungsgemäßen Mischungen aus den Komponenten A) + B) + C) kann simultan oder auch sukzessive über die Zwischenstufen A) + B) oder A) + C) oder B) + C) erfolgen.

Gegenstand der vorliegenden Erfindung ist somit auch ein Verfahren zur Herstellung der erfindungsgemäßen Mischungen aus den Komponenten A) + B) +C), das dadurch gekennzeichnet ist, daß man die Komponenten A), B) und C) in den erfindungsgemäßen Mengenverhältnissen simultan oder sukzessive entweder

1. als Lösungen, in den für die Komponenten A), B) und C) üblichen Lösungsmitteln gelöst, mischt und dieses Gemisch in üblicher Weise aufgearbeitet, oder

2. in der Schmelze mischt, homogenisiert und in üblicher Weise, beispielsweise zu Granulat, aufarbeitet.

Die erfindungsgemäß einzusetzenden Komponenten A), B) und C) lassen sich außerdem durch ein sogenanntes "reactiv polymer processing" in Gegenwart von Radikalbildnern mischen.

Hierbei werden die Komponenten A), B) und C) in den erfindungsgemäßen Mengenverhältnissen simultan oder sukzessive unter Zusatz von 0,01 Gew.-% bis 5 Gew.-%, vorzugsweise von 0,01 Gew.-% bis 2 Gew.-%, bezogen auf das Gewicht der Komponente B, an Radikalbildnern bei Temperaturen von 240 °C bis 330 °C, vorzugsweise von 260 °C bis 320 °C in der Schmelze vermischt und diese Mischung von 0,1 Min. bis 30 Min. bei den Mischungstemperaturen gehalten und dann in üblicher Weise abgekühlt, isoliert und granuliert.

Gegenstand der vorliegenden Erfindung ist somit auch ein Verfahren zum Mischen der erfindungsgemäßen Komponenten A) + B) + C) in den erfindungsgemäßen Mengen, indem man diese simultan oder sukzessive bei Temperaturen zwischen 240 °C und 330 °C, vorzugsweise zwischen 260 °C und 320 °C in der Schmelze vermischt, das dadurch gekennzeichnet ist, daß man von 0,01 Gew.-% bis 5 Gew.-%, bezogen auf das Gewicht der Komponente B), an Radikalbildnern zusetzt und diese Mischungen von 0,1 Min. bis 30 Min. bei den Mischungstemperaturen hält und dann in üblicher Weise abkühlt, isoliert und granuliert.

Gegenstand der vorliegenden Erfindung sind außerdem die nach diesem erfindungsgemäßen Verfahren erhältlichen Mischungen.

Mischwerkzeuge für dieses Verfahren sind beispielsweise Kneter oder Extruder.

Als Radikalbildner können anorganische oder organische Peroxide oder Hydroperoxide, z.B. Verbindungen des Typs $R_1OOR_2$ eingesetzt werden ($R_1$ = $R_2$ = Alkyl, Aryl, Acyl, Wasserstoff; $R_1$ = Alkyl, Aryl, Acyl; $R_2$ = Wasserstoff). Die Gesamtzahl der Kohlenstoffatome in den Resten $R_1$ und $R_2$ ist $\leq$ 30, bevorzugt $\leq$ 25. Beispiele sind Peroxide oder Hydroperoxide, wie Dibenzoylperoxid, Dilauroylperoxid, 2,5-Di-tert.-butyl-2,5-dimethylhexyl-hydroperoxid, Di-tert.-butylperoxid oder Dicumylperoxid.

Des weiteren sind anorganische Verbindungen mit einer O-O-Gruppierung, wie z.B. Peroxide, Per-Verbindungen von Säuren des Schwefels, z.B. Persulfate oder auch Perborate als Radikalbildner geeignet. Bevorzugt werden Persulfate, z.B. $K_2S_2O_8$. Beispiele sind $(NH_4)_2S_2O_8$, $Na_2S_2O_8$, $BaO_2$, $NaBO_3 \cdot 4\ H_2O$, $Na_2B_2O_8 \cdot 10\ H_2O$. Ein ganz besonders bevorzugter Mengenbereich an Peroxid/Hydroperoxid-Verbindungen liegt bei 0,05 bis 0,30 Gew.-%.

Die erfindungsgemäßen Mischungen aus den Komponenten A), B) und C) können noch die für die jeweiligen Komponenten üblichen Additive in den üblichen Mengen enthalten, wie sie bereits für die entsprechenden Komponenten in der deutschen Patentanmeldung P 3 833 953.6 (Le A 26 397) erwähnt sind.

Es sind dies im einzelnen beispielsweise Füllstoffe und/oder Nukleierungsmittel und/oder Fasern in den üblichen Mengen. Anorganische Füllstoffe sind beispielsweise Keramikfüllstoffe wie Aluminiumnitrit, Silicate, Titandioxid, Talkum, Kreide, Glimmer, Ruß und Graphit, Fasern sind beispielsweise solche aus Glas, aus Kohlenstoff oder aus flüssig-kristallinen Polymeren. Nukleierungsmittel können beispielsweise sein Bariumsulfat oder $TiO_2$.

Entsprechendes gilt für den Zeitpunkt und die Art der Einarbeitung der Additive, die in der deutschen Patentanmeldung P 3 833 953.6 ebenfalls bereits beschrieben ist.

Die erfindungsgemäßen Mischungen aus den Komponenten A) + B) + C) können zu beliebigen Formkörpern oder Granulat auf üblichen Maschinen wie Extrudern oder Spritzgußmaschinen in bekannter Weise verarbeitet werden.

Geeignete Formkörper für die erfindungsgemäßen Mischungen aus den Komponenten A) + B) + C) sind bei spielsweise Rohre, Profile, Platten, Stäbe und Monofile.

Sie finden Verwendung im Kfz. Freizeit- Sport- und Elektro-Sektor.

Beispiele

Eingesetzte Substanzen (Komponenten)

A) Polycarbonate

A1) Herstellung eines Copolycarbonates I
148,2 g (0,65 Mol) 2,2-Bis-(4-hydroxyphenyl)propan, 108,5 g (0,35 Mol) des Bisphenols des Beispiels A der deutschen Patentanmeldung P 3 833 953.6 (Le A 26 397), 336,6 g (6 Mol) KOH und 2700 g Wasser werden in einer Inertgasatmosphäre unter Rühren gelöst. Dann fügt man eine Lösung von 6,59 g (0,032 Mol) Isooctylphenol in 2500 g Methylenchlorid zu. In die gut gerührte Lösung wurden bei pH 13-14 und 21-25° C 198 g (2 Mol) Phosgen eingeleitet. Danach wird 1 ml Ethylpiperidin zugegeben und noch 45 Minuten gerührt. Die bisphenolfreie wäßrige Phase wird abgetrennt, die organische Phase nach Ansäuern mit Phosphorsäure mit Wasser neutral gewaschen und vom Lösungsmittel befreit. Das Polycarbonat zeigte eine rel. Lösungsviskosität von 1,3 (gemessen an einer 0,5 gew.-%igen Lösung in Methylenchlorid). Die Glastemperatur betrug 187° C (DSC).
A2) Herstellung eines Copolycarbonates II
Es wurde wie im Beispiel A1) verfahren, wobei 102,6 g (0,45 Mol) 2,2-Bis-(4-hydroxyphenyl)-propan und 170,5 g (0,55 Mol) des Bisphenols des Beispiels A der deutschen Patentanmeldung P 3 833 953.6 und 4,74 g (0,023 Mol) Isooctylphenol als Kettenabbrecher und 2 Mol Phosgen eingesetzt wurden. Das erhaltene Polycarbonat hatte eine rel. Lösungsviskosität von 1,295 und eine Glastemperatur von 204° C.
A3) Polycarbonat auf der Basis Bisphenol A (rel. Lösungsviskosität 1,28)

B) Polyamide

B1) Polyamid 6 mit einer relativen Viskosität von 3,5 (gemessen an einer 1 gew.-%igen Lösung in m-Kresol bei 25° C).
B2) Polyamid mit verringerter Aminogruppenkonzentration
Auf einem kontinuierlich arbeitenden Doppelwellenextruder wurden 95,5 Gew.-% des Polyamids B1) bei Massetemperaturen zwischen 270 und 285° C aufgeschmolzen und zu der Schmelze 0,5 Gew.-% Phthalsäureanhydrid zudosiert. Der homogenisierte Schmelzestrang wurde in Wasser abgeleitet, granuliert und getrocknet. Die Amino-Endgruppen wurden zu 0,008 Gew.-% (an einer 1,5 %igen Lösung in Phenol/Methanol durch Titration mit Perchlorsäure) bestimmt.
B3) Polyamid 6 mit einer relativen Viskosität von 4,0 (gemessen wie für B1.)

C) Elastomere

C.1 Ein Emulsionspolymerisat aus 80 Gew.-Teilen vernetztem Polybutadien (Gelgehalt über 70 %, gemessen in Toluol) und 20 Gew.-Teilen Pfropfauflage aus 18 Gew.-Teilen Methylmethacrylat und 2 Gew.-Teilen n-Butylacrylat, wobei der mittlere Teilchendurchmesser der in Latexform vorliegenden Pfropfgrundlage zwischen 0,3 und 0,4 µm lag hergestellt in bekannter Weise.
(Näheres siehe DE-OS 3 105 364 oder DE-OS 3 019 233).
C.2 Emulsionspolymerisat wie C.1, nur wird n-Butylacrylat in C.1 durch t-Butylacrylat ersetzt.
C.3 EPM-Kautschuk hergestellt aus 45 Gew.-% Ethylen, 54,3 Gew.-%. Propylen und 0,7 Gew.-%. Maleinsäureanhydrid mit einer Dichte von 0,87 g/cm. (Derzeit Handelsprodukt der Firma Exxon, Exxelor VA 1803®).
C.4 Polyesteramid hergestellt gemäß US-PS 4 129 715
A) Eine Mischung aus 596,0 (0,298 Mol) Poly(tetramethylenazelat)glykol (Mw = 2000); 64,50 g (0,342 Mol) Azelainsäure; 50,08 g (0,343 Mol) Adipinsäure; 0,5 g p-Toluolsulfonsäuremonohydrat und 400 ml Xylol wird unter Rückfluß erhitzt. Das Wasser wird während der Kondensation kontinuierlich entfernt. Nach weiteren 24 Stunden Rückfluß, währenddessen kein Wasser mehr abgespalten wird, ersetzt man den Rückflußkühler durch eine Soxhlet-Apparatur, die mit Molekular-Sieb gefüllt ist. Dann wird 16 Stunden extrahiert und schließlich das Xylol bei vermindertem Druck destillativ entfernt. Dabei wird ein Prepolymer mit COOH-Endgruppen erhalten (Säurezahl 63,8; Mw 916,6).
B) Eine Mischung von 123,04 g (0,139 Äquivalente) dieses Prepolymeren A); 25,18 g (0,268 Äquiv.) Azelainsäure; 19,55 g (0,268 Äquiv.) Adipinsäure und 550 ml trockenes Tetramethylensulfon wird in

$N_2$-Atmosphäre unter Rühren auf 165 °C erwärmt. Dann werden 0,37 g 1,3-Dimethylphospholan-1-Oxid zugegeben und anschließend tropfenweise eine Lösung aus 42,14 g (0,335 Äquiv.) 4,4'-Methylenbis(phenylisocyanat) und 29,10 g (0,335 Äquiv.) 2,4-Toluoldiisocyanat in 200 ml trockenem Tetramethylensulfon. Nach kompletter Zugabe wird die Mischung bei der obengenannten Temperatur eine Stunde lang gerührt, dann in 45 minütigem Abstand drei Portionen von je 2 ml einer Isocyanat-Mischung der oben beschriebenen Zusammensetzung zugegeben. In Anschluß daran wird eine weitere Stunde bei 165 °C gerührt, bevor das Produkt in ca. 30 l kaltes Wasser gegossen wird. Der Feststoff wird isoliert und nach dem Zerkleinern mit ca. 4 l Methanol 16 Stunden digeriert. Anschließend wird abfiltriert und im Vakuum bei 120 °C 16 Stunden getrocknet. Das so erhaltene Produkt besitzt eine inhärente Viskosität von 1,1, eine Shore-A-Härte von 90 und eine Dichte von 1,15 g/cm³.

D) $K_2S_2O_8$ (Radikalbildner, Herstellung literaturbekannt).

Herstellung und Prüfung der Formmassen

Auf einem kontinuierlich arbeitenden Doppelwellenextruder wurden die Komponenten C) und B) jeweils aufgeschmolzen und zu deren Schmelze die Komponenten A) und gegebenenfalls D) zudosiert und in der Schmelze homogenisiert.

Die Zylindertemperaturen des Doppelwellenextruders wurden so gewählt, daß Massetemperaturen von 260 °C bei 340 °C eingehalten wurden. Der Schmelzestrang wurde entgast in Wasser abgeleitet, granuliert und getrocknet.

Von den Formmassen wurden auf einer üblichen Spritzgußmaschine 80 mm x 10 mm x 4 mm Prüfstäbe hergestellt. Geprüft wurden der Zug-E-Modul (DIN 53 457), die Wärmeformbeständigkeit (Vicat B nach DIN 53 460 und die HDT-A, -B an flach aufgelegten Prüfkörpern bei einer Randfaserdehnung von 0,2 %, ISO 75) sowie die Schlagzähigkeit bzw. Kerbschlagzähigkeit nach Izod (ISO 180) bei verschiedenen Temperaturen.

Tabelle 1

| Zusammensetzung der Formmassen (Angaben in Gew.-%) | | | | | | | | | | | |
|---|---|---|---|---|---|---|---|---|---|---|---|
| Beispiel-Nr. | $A^1$ | $A^2$ | $Z^3$ | $B^1$ | $B^2$ | $B^3$ | C1 | C2 | C3 | C4 | D |
| 1* | -- | -- | 53 | -- | -- | 23 | 13,3 | 5,7 | -- | 5 | - |
| 2* | -- | -- | 38 | -- | -- | 38 | 9,5 | 9,5 | -- | 5 | - |
| 3* | -- | -- | 36 | -- | -- | 36 | 9 | 9 | -- | 10 | - |
| 4* | -- | -- | 23 | -- | -- | 53 | 5,7 | 13,3 | -- | 5 | - |
| 1 | 40 | -- | -- | -- | 40 | -- | -- | 20 | -- | -- | - |
| 2 | 60 | -- | -- | -- | 20 | -- | -- | 20 | -- | -- | - |
| 3 | -- | 47,5 | -- | 37,5 | -- | -- | -- | -- | 10 | 5 | - |
| 4 | -- | 55,0 | -- | 30 | -- | -- | -- | -- | 10 | 5 | - |
| 5 | 38 | -- | -- | -- | -- | 42 | 10 | -- | 5 | 5 | - |
| 6 | -- | 47,5 | -- | 37,4 | -- | -- | -- | -- | 10 | 5 | 0,1 |
| 7 | -- | 55,0 | -- | 29,9 | -- | -- | -- | -- | 10 | 5 | 0,1 |
| 8 | 53 | -- | -- | -- | -- | 23 | 13,3 | 5,7 | -- | 5 | - |
| 9 | 38 | -- | -- | -- | -- | 38 | 9,5 | 9,5 | -- | 5 | - |
| 10 | 36 | -- | -- | -- | -- | 36 | 9 | 9 | -- | 10 | - |
| 11 | 23 | -- | -- | -- | -- | 53 | 5,7 | 13,3 | -- | 5 | - |

* Vergleichsversuche

Tabelle 2

| Prüfergebnisse der Formmassen | | | | | | |
|---|---|---|---|---|---|---|
| Beispiel-Nr. | Biege-E-Modul [N/mm²] | $a_n$ [kJ/m²] | $a_k$ [kJ/m²] | Vicat B [°C] | HDT A [°C] | HDT B [°C] |
| 1* | 1770 | n.g. | 54 | 127 | 117 | 127 |
| 2* | 1663 | n.g. | 40 | 128 | 99 | 120 |
| 3* | 1650 | n.g. | 72 | 120 | 74 | 113 |
| 4* | 1650 | n.g. | 18 | 117 | 52 | 104 |
| 1 | 1840 | n.g. | 16 | 161 | 103 | 142 |
| 2 | 1848 | n.g. | 18 | 174 | 132 | 158 |
| 3 | 1710 | n.g. | 25 | 144 | 88 | 135 |
| 4 | 1710 | n.g. | 50 | 146 | 114 | 145 |
| 5 | 1961 | n.g. | 61 | 142 | 93 | 125 |
| 6 | 1790 | n.g. | 14 | 143 | 112 | 139 |
| 7 | 1900 | n.g. | 22 | 144 | 126 | 146 |
| 8 | 1913 | n.g. | 40 | 148 | 125 | 149 |
| 9 | 1891 | n.g. | 52 | 143 | 106 | 135 |
| 10 | 1848 | n.g. | 54 | 134 | 92 | 120 |
| 11 | 2078 | n.g. | 17 | 138 | 57 | 115 |

* Vergleichsversuche

## Ansprüche

1. Ternäre, thermoplastische Mischungen, enthaltend

A) 10 bis 89,9 Gew.-% thermoplastische Polycarbonate A 1) auf Basis von Diphenolen der Formel (I)

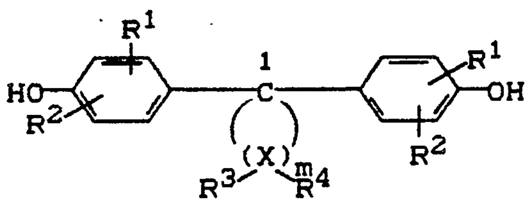

(I),

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X, $R^3$ und $R^4$ gleichzeitig Alkyl ist,

B) 10 Gew.-% bis 89,9 Gew.-% an teilkristallinen oder amorphen Polyamiden und

C) 0,1 Gew.-% bis 50 Gew.-% an Elastomeren,

wobei die Summe der Gewichtsprozente aus A + B + C jeweils 100 Gew.-% ist.

2. Verfahren zur Herstellung der Mischungen des Anspruchs 1, dadurch gekennzeichnet, daß man die Komponenten A, B und C in den in Anspruch 1 angegebenen Mengenverhältnissen simultan oder sukzessive, als Lösungen in den für die Komponenten A, B und C üblichen Lösungsmitteln gelöst, mischt und dieses Gemisch in üblicher Weise aufarbeitet.

3. Verfahren gemäß Anspruch 2, dadurch gekennzeichnet, daß man die Komponenten A, B und C in den in Anspruch 1 angegebenen Mengenverhältnissen simultan oder sukzessive in der Schmelze mischt, homogenisiert und in üblicher Weise aufarbeitet.

4. Verfahren gemäß Anspruch 3, indem man die Komponenten A, B und C in den in Anspruch 1 angegebenen Mengenverhältnissen simultan oder sukzessive bei Temperaturen zwischen 240 °C und 330 °C in der Schmelze vermischt, dadurch gekennzeichnet, daß man von 0,01 Gew.-% bis 5 Gew.-% an Radikalbildnern zusetzt und diese Mischung von 0,1 Min bis 30 Min bei den Mischungstemperaturen hält und dann in üblicher Weise abkühlt, isoliert und granuliert.

5. Mischungen, erhältlich nach dem Verfahren des Anspruchs 4.